# EUROPÄISCHE PATENTSCHRIFT

(11) **EP 0 971 858 B1**
(45) Veröffentlichungstag und Bekanntmachung des Hinweises auf die Patenterteilung: **05.12.2001**
(21) Anmeldenummer: 98910948.3
(22) Anmeldetag: 02.04.1998
(51) Int. Cl.: C02F 9/00, C02F 3/12, C02F 1/44, C02F 1/52

(54) **VERFAHREN ZUM AUFBEREITEN VON ABWASSER, INSBESONDERE AUS MÄLZEREIEN UND BRAUEREIEN**
METHOD FOR TREATING WASTE WATER, ESPECIALLY FROM AND MALT HOUSES AND BREWERIES
PROCEDE POUR LE TRAITEMENT DES EAUX USEES, NOTAMMENT DE MALTERIES ET DE BRASSERIES

(30) Priorität: 03.04.1997 AT 56097
(43) Veröffentlichungstag der Anmeldung: 19.01.2000
(73) Patentinhaber: Frings Recycling-Anlagen GmbH & Co. KG, 53115 Bonn (DE); Schwander GmbH, 61118 Bad Vilbel (DE)
(72) Erfinder: MANDERSCHEID, Karl, D-50935 Köln (DE); LINDEMANN, Johannes, D-53619 Rheinbreitbach (DE); RETTIG, Horst, D-60486 Frankfurt am Main (DE)
(74) Vertreter: Hübscher, Gerhard, Dipl.-Ing.
(86) Internationale Anmeldenummer: IB9800564
(87) Internationale Veröffentlichungsnummer: WO9843919

(56) Entgegenhaltungen:
- WO-A-95/25197
- WO-A-96/36424
- DE-A- 4 000 834
- DE-A- 19 517 473
- DE-A- 19 544 336
- PATENT ABSTRACTS OF JAPAN vol. 012, no. 338 (C-527), 12.September 1988 & JP 63 097289 A (KUBOTA LTD), 27.April 1988,

## Beschreibung

Die Erfindung bezieht sich auf ein Verfahren zum Aufbereiten von Abwasser, aus Mälzereien und Brauereien, das beim betrieblichen Einsatz mit Mikroorganismen, Salzen und organischen Verbindungen belastet wird.

Wie Untersuchungen. im Zusammenhang mit Qualitätsbeeinflussungen des Bieres gezeigt haben, können mit Malz eingebrachte Mikroorganismen und deren Sporen, vor allem der Chlamidosporenpilz Fusarium, Nickel- und Eisenionen in Verbindung mit Iso-Humolon sowie Calciumoxalat die Bierqualität nachhaltig beeinträchtigen. Um die Gefahr solcher Belastungen des Malzes möglichst klein zu halten, wird zum Einweichen der Gerstenkömer für den Keimprozeß Trinkwasser eingesetzt, das nach dem Ankeimen der Gerstenkömer mit Mikroorganismen, Salzen und organischen Verbindungen belastet ist und als Abwasser ausgeschieden wird. Es ergibt sich daher bei der Malzbereitung ein großer Bedarf an Trinkwasser, das nach dem betrieblichen Einsatz nicht mehr genutzt werden kann.

Um das beim Reinigen von gebrauchten Getränkeflaschen anfallende Wasch- und Spülwasser in einem Kreislauf führen zu können, ist es bekannt (DE 195 17 473 A1), diese organisch und anorganisch hochbelasteten Wasch- und Spülwässer zunächst einer biologischen Reinigung zu unterwerfen und dann nach der aeroben Behandlung einer mehrstufigen Membranfiltration zuzuführen. Zu diesem Zweck sind eine Ultrafiltrationsstufe mit einer Rückführung des anfallenden Konzentrates und anschließend eine zweistufige Umkehrosmose bei mittlerem Arbeitsdruck vorgesehen, wobei das Retentat der ausgangsseitigen Osmosestufe zur eingangsseitigen rückgeführt wird. Mittels einer zusätzlichen, vorzugsweise mehrstufigen Hochdruck-Umkehrosmose, die an die eingangsseitige Mitteldruck-Umkehrosmosestufe angeschlossen ist, wird das anfallende Konzentrat aus dem Kreislauf ausgeschieden. Mit diesem Verfahren Können die bei der Behandlung der Abwässer von Brauereien und Mälzereien zu berücksichtigenden besonderen Anforderungen nicht erfüllt werden.

Schließlich ist es bekannt (JP 63097289 A), zum chemischen Phosphatabbau biologisch gereinigter Abwässer ein Fällungsmittel auf Eisenchloridbasis einzusetzen und den anfallenden Schlamm in einer Ultrafiltrationsstufe abzuscheiden. Eine solche Abwasserbehandlung ist für den Einsatz bei Mälzereien oder Brauereien völlig unzulänglich.

Der Erfindung liegt somit die Aufgabe zugrunde, ein Verfahren der eingangs geschilderten Art zum Aufbereiten von Abwasser aus Mälzereien und Brauereien so auszugestalten, daß es mit einem vergleichsweise geringen Behandlungsaufwand beispielsweise wieder zum Einweichen der Gerstenkömer für den Keimprozeß eingesetzt werden kann. Außerdem soll das ausgeschiedene, mit den verbleibenden Reststoffen belastete Restwasser ohne weitere Behandlung der Kanalisation zugeführt werden können.

Die Erfindung löst die gestellte Aufgabe dadurch, daß das Abwasser nach einer Behandlung mit Belebtschlamm einer Fällung vorzugsweise mit Eisen(III)-chlorid als Fällungsmittel und dann einer umgekehrten Osmose unterworfen wird, bevor es dem betrieblichen Einsatz im Kreislauf wieder zugeführt wird.

Durch die Verbindung einer biologischen Behandlung des Abwassers mit einer daran anschließenden umgekehrten Osmose kann in überraschender Weise das Abwasser von allen Belastungen gereinigt und Trinkwasserqualität erreicht werden, wenn das biologisch gereinigte Abwasser vor der Umkehrosmose einer Fällung unterworfen wird. Die ausgefällten Stoffe können dann mit anderen vorhandenen Feststoffen gegebenenfalls nach einer Sedimentation mittels eines Filters abgetrennt werden, bevor das vorgereinigte Abwasser der umgekehrten Osmose zugeführt wird. Durch diese Vorfilterung wird außerdem eine unnötige Membranbelastung bei der umgekehrten Osmose vermieden. Das gereinigte Abwasser kann somit im Kreislauf wieder dem betrieblichen Einsatz zugeführt werden, ohne eine die spätere Bierqualität beeinträchtigende Belastung des Malzes befürchten zu müssen, das aus Gerstenkörnern mit einem in dieser Art gereinigten Weichwasser gewonnen wird. Nach einem biologischen Abbau der organischen Schmutzfracht des Abwassers werden aus diesem die verbliebenen Mikroorganismen, gelöste Moleküle und Salze durch eine umgekehrte Osmose abgetrennt, wobei das Retentat kontinuierlich abgeleitet und das Permeat als reines Weichwasser mit Trinkwasserqualität genutzt werden kann. Da aufgrund der umgekehrten Osmose das Weichwasser zusätzlich entkalkt wird, ergibt sich sogar der Vorteil einer dadurch gegenüber frischem Trinkwasser erzielbaren Qualitätssteigerung. Das kontinuierlich abgeleitete Retentat kann ohne zusätzliche Maßnahmen in die Kanalisation abgeleitet werden, weil es alle hiefür vorgegebenen Bedingungen erfüllt.

Das in dieser Art gereinigte Abwasser braucht dem betrieblichen Einsatz jedoch nicht unmittelbar zugeführt zu werden. Es kann in geeigneten Behältern eine Zwischenlagerung erfahren. Damit während der Zwischenlagerung des gereinigten Abwassers eine Verkeimung ausgeschlossen werden kann, kann das Abwasser nach seiner Reinigung entkeimt werden, beispielsweise mit Hilfe einer UV-Bestrahlung oder einer Ozonbehandlung.

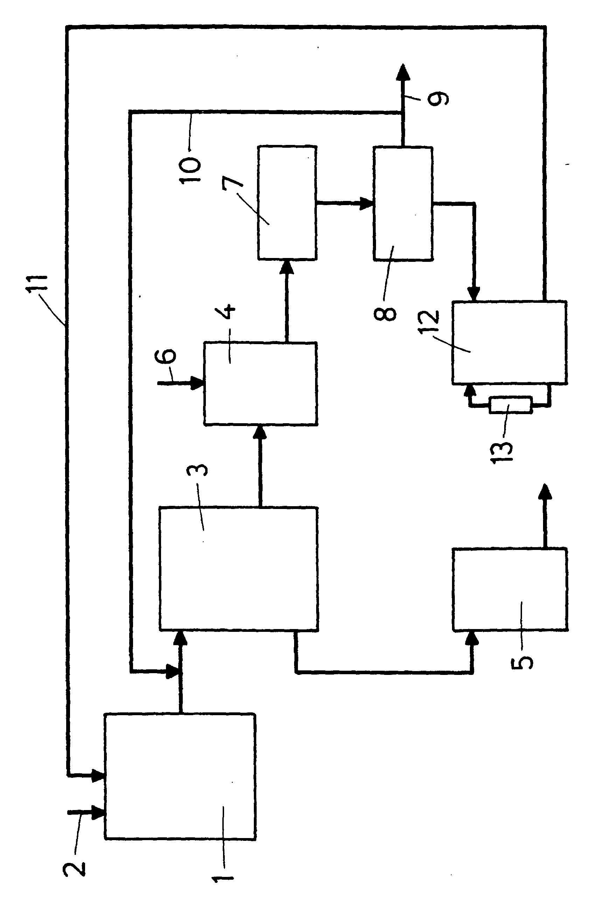

Das erfindungsgemäße Verfahren wird anhand der Zeichnung näher erläutert, die eine Anlage zur Durchführung einer erfindungsgemäßen Aufbereitung von Abwasser in einem vereinfachten Blockschaltbild zeigt.

Das in einer Anlage 1 beispielsweise zum Ankeimen von Gerstenkörnern in einer Mälzerei eingesetzte Trinkwasser, das über eine Zuleitung 2 der Anlage 1 zugeführt wird, wird bei diesem betrieblichen Einsatz mit Mikroorganismen, organischen Verbindungen und gelösten Salzen belastet, was bei herkömmlichen Anlagen dieser Art ein Ableiten des Abwassers in die Kanalisation zur Folge hat. Um eine für eine Kreislaufführung des Wassers über die Anlage 1 geeignete Aufbereitung des Abwassers zu ermöglichen, wird das Abwasser zunächst einem Reaktor 3 zugeführt, in dem die organische Schmutzfracht des Abwassers biologisch abgebaut wird. Zu diesem Zweck ist in dem Reaktor 3 ein Belebtschlamm enthalten, der zunächst über eine intensive Belüftung mit Sauerstoff versorgt wird, bevor durch das Steuerungsprogramm von der aeroben auf eine anoxische Phase gewechselt wird, um sowohl Stickstoffverbindungen als auch Phosphate zu eliminieren. An diese Abbauphasen schließt sich eine Sedimentationsphase an, in der sich die Bakterienflocken absetzen, so daß das überstehende, biologisch vorgereinigte Abwasser abgezogen und einem nachgeschalteten Fällungstank 4 zugeführt werden kann.

Der Reaktor 3 steht dann für die biologische Behandlung einer weiteren Abwassercharge zur Verfügung. Die Belüftung der einzelnen Chargen, die Denitrifikation, die Sedimentation der Biomasse sowie die Überwachung der Temperatur, des pH-Wertes, des Sauerstoffgehaltes u. dgl. können dabei weitgehend automatisch gesteuert werden. Der im Reaktor 3 anfallende Überschußschlamm wird in einen Stapeltank 5 abgepumpt, wo er einer mehrtägigen aeroben Schlammstabilisierung durch eine weitere Belüftung und Zugabe eines Flockungsmittels eingedickt wird, um dann entweder in einer kommunalen Kläranlage entsorgt oder in der Landwirtschaft wiederverwertet zu werden.

Im Fällungstank 4 können restliche Verunreinigungen zur Verminderung des chemischen Sauerstoffbedarfes ausgeflockt werden, und zwar mit Hilfe eines Fällungsmittels, das über die Leitung 6 zugeführt wird. Hiefür eignet sich insbesondere Eisen(lll)-chlorid, mit dessen Hilfe z. B. auch Phosphate chemisch eliminiert werden können. Nach der Fällung wird das Abwasser aus dem Fällungstank 4 einer Filterstufe 7 zugeführt, in dem die noch vorhandenen Feststoffe zurückgehalten werden.

Diese Filterstufe 7 besteht vorzugsweise aus wenigstens einem Tuch- oder Kiesfilter mit einer Trenngrenze von 1 bis 20 um, vorzugsweise 5 bis 10 um oder einer Mikro- oder Ultrafiltrationsstufe mit einer Trenngrenze von 0,005 bis 5 µm, vorzugsweise von 0,05 bis 1 µm. Durch einen Trübungswächter kann die Verschmutzung der Filterstufe 7 überwacht werden.

Das in dieser Weise vorgereinigte Abwasser wird dann in einer Filterstufe 8 einer umgekehrten Osmose unterworfen, wobei durch eine geeignete Wahl der Membranen die vorhandenen Mikroorganismen, gelöste Moleküle und Salze abgetrennt werden. Das Retentat wird kontinuierlich abgeleitet und nach einer Endkontrolle über eine Ablaufleitung 9 dem Kanal zugeführt. Werden die für die Kanaleinleitung erforderlichen Auslaufwerte nicht erreicht, so kann das Retentat über die Rückleitung 10 wieder dem Reaktor 3 zugeführt werden.

Das Permeat weist Trinkwasserqualität auf und kann der betrieblichen Anlage 1 über die Kreislaufleitung 11 wieder zugeführt werden. Gemäß dem dargestellten Ausführungsbeispiel ist eine Zwischenlagerung in einem Lagertank 12 vorgesehen, der an eine Entkeimungsstufe 13 angeschlossen ist, so daß die Gefahr einer Wiederbekeimung ausgeschlossen werden kann. Diese Entkeimungsstufe 13 kann eine UV-Bestrahlung oder eine Ozonbehandlung umfassen.

Aufgrund der Kreislaufführung eines Großteiles des in der Anlage 1 betrieblich eingesetzten Wassers ergibt sich eine erhebliche Frischwassereinsparung, wobei der zusätzliche Vorteil einer Entkalkung des im Kreislauf geführten Wassers erhalten wird. Frischwasser über die Zuleitung 2 ist lediglich zum Ausgleich der Abwasserverluste erforderlich.

Aus einer Anlage 1 einer Mälzerei fiel in einem Versuch Abwasser an, das einen chemischen Sauerstoffbedarf (CSB) von 1410 mg/l und einen auf 5 Tage bezogenen biochemischen Sauerstoffbedarf (BSB-5) von 730 mg/l aufwies. Der pH-Wert betrug 7,5. Außerdem konnten Belastungen durch 23 mg/l Ammonium, 22 mg/l Nitrate, 1200 mg/l Chloride, 8,35 mg/l Phosphate und 31 mg/l Sulfate festgestellt werden. Mit Hilfe der Umsetzung des Abwassers mit Belebtschlamm im Reaktor 3 konnte der chemische Sauerstoffbedarf auf 44 mg/l und der biochemische Sauerstoffbedarf auf 9 mg/l gesenkt werden. Der Gehalt an Ammonium reduzierte sich auf 16 mg/l, der Chloridgehalt auf 647 mg/l und der Phosphatgehalt auf 4,57 mg/l. Der Nitratgehalt betrug 123 mg/l und der Nitritgehalt 40,2 mg/l.

Nach einer Fällung mit Eisen(III)-chlorid und einer Vorfiltration bei einer Trenngrenze von 15 um konnte das Abwasser mit einem chemischen Sauerstoffbedarf von 100mg/l, einem pH-Wert von 7,2, einem elektrischen Leitwert von ca. 6000 µS/cm, einem Kaliumgehalt von 165 mg/l, einem Ammoniumgehalt von 5 mg/l, einem Nitritgehalt von 1mg/l, einem Nitratgehalt von 100 mg/l, einem Chloridgehalt von 1000 mg/l und einem Phosphatgehalt von 10 mg/l der umgekehrten Osmose unterworfen werden. Die Permeatmenge betrug 22,5 m³/h. Der chemische Sauerstoffbedarf des Permeats lag zwischen 5 und 10 mg/l. Bei einem pH-Wert von 6,9 betrug die elektrische Leitfähigkeit 541 µS/cm. An Restbelastungen konnten für Kalium 12 mg/l, für Nitrate 10 mg/l und für Chloride 100 mg/l ermittelt werden. Der Restgehalt an Ammonium, Nitriten und Phosphaten lag unter der Meßgrenze. Als Keimzahlen wurden für Bakterien bei 20 °C drei keimbildende Einheiten/ml und für Bakterien bei 36 °C elf keimbildende Einheiten/ml bestimmt. Es konnten in je 100 ml des gereinigten Abwassers keine coliformen Keime, keine Coli-Bakterien und keine Fekal Streptococcen sowie keine Clostridien festgestellt werden.

## Patentansprüche

1. Verfahren zum Aufbereiten von Abwasser aus Mälzereien und Brauereien, das beim betrieblichen Einsatz mit Mikroorganismen, Salzen und organischen Verbindungen belastet wird, **dadurch gekennzeichnet, daß** das Abwasser nach einer Behandlung mit Belebtschlamm einer Fällung vorzugsweise mit Eisen(III)-chlorid als Fällungsmittel und dann einer umgekehrten Osmose unterworfen wird, bevor es dem betrieblichen Einsatz im Kreislauf wieder zugeführt wird.

2. Verfahren nach Anspruch 1, **dadurch gekennzeichnet, daß** das Abwasser vor der umgekehrten Osmose vorgefiltert wird.

3. Verfahren nach einem der Ansprüche 1 oder 2, **dadurch gekennzeichnet, daß** das Abwasser nach der umgekehrten Osmose zwischengelagert und nach einer Entkeimung dem betrieblichen Einsatz zugeführt wird.

## Claims

1. A process for the treatment of effluent from malt factories and breweries, such effluent being contaminated, during operational use, with micro-organisms, salts and organic compounds, **characterised in that** after a treatment with activated sludge the effluent is subjected to a precipitation preferably with iron (III) chloride as precipitating agent and then to reverse osmosis before being recycled to operational use.

2. A process according to claim 1, **characterised in that** the effluent is pre-filtered before the reverse osmosis.

3. A process according to claim 1 or 2, **characterised in that** the effluent is intermediately stored after the reverse osmosis and is fed to operational use after sterilisation.

## Revendications

1. Procédé de traitement des eaux usées, issues de malteries et de brasseries, polluées en utilisation industrielle par des micro-organismes, des sels et des combinaisons organiques, **caractérisé en ce que**, après traitement avec de la boue activée, les eaux usées sont soumises à une précipitation, de préférence avec du chlorure de fer (III) comme agent de précipitation, puis à une osmose inverse, avant d'être retournées à l'utilisation industrielle.

2. Procédé selon la revendication 1, **caractérisé en ce que** les eaux usées sont pré-filtrées avant de subir l'osmose inverse.

3. Procédé selon l'une des revendications 1 ou 2, **caractérisé en ce que**, après avoir subi l'osmose inverse, les eaux usées sont mises en stockage intermédiaire et retournées à l'utilisation industrielle, après avoir subi une stérilisation.
